# EUROPÄISCHE PATENTSCHRIFT

(11) **EP 1 124 298 B1**
(45) Veröffentlichungstag und Bekanntmachung des Hinweises auf die Patenterteilung: **22.08.2007**
(21) Anmeldenummer: 01100047.8
(22) Anmeldetag: 09.01.2001
(51) Int. Cl.: H02G 3/18

(54) **Unterflurgerätedose**
Underfloor apparatus box
Boîtier pour appareillage installé sous plancher

(30) Priorität: 08.02.2000 DE 20002200 U
(43) Veröffentlichungstag der Anmeldung: 16.08.2001
(73) Patentinhaber: OBO Bettermann GmbH & Co. KG, 58710 Menden (DE)
(72) Erfinder: Raschke, Jörg, 51674 Wiehl (DE)
(74) Vertreter: Patentanwälte Ruff, Wilhelm, Beier, Dauster & Partner

(56) Entgegenhaltungen:
- EP-A- 0 656 676

## Beschreibung

Die Erfindung betrifft eine Unterflurgerätedose mit einem Teppichschutzrahmen und mit einer mit diesem verbundenen rahmenförmigen Gehäusewand, wobei an zwei gegenüberliegenden Seiten der Gehäusewand flache Schieber geführt sind, die federvorgespannt und nach Lösen einer Arretierung zur Verrastung unterhalb des Fußbodens mit der Unterkante des Randes der Öffnung für die Unterflurgerätedose in Eingriff bringbar sind und wobei die Schieber mit einem in ihrer Längsrichtung verlaufenden Schlitz versehen sind, in den Führungsnocken eingreifen, die von der Wand nach außen abstehen.

Eine Unterflurgerätedose dieser Art ist aus der EP 0 656 676 Bl bekannt. Dort hat man die Schieber jeweils mit einer quer abstehenden Lasche, an der auch eine nach außen wirkende Zugfeder angebracht ist und mit einer nach unten gerichteten Anschlagnase versehen, die an einem Zahn in der Form einer hochgebogenen Lasche arretiert wird bis - nach dem Einsetzen der Gerätedose in die entsprechende Montageöffnung - diese Arretierung durch Anheben der Lasche aufgehoben wird, so dass die Feder den Schieber in seine Einbauposition nach außen zieht und mit seiner schrägen Endkante am Rand der Einbauöffnung zur Anlage bringt. Um diese für das Ausrasten notwendige Anhebebewegung zu ermöglichen, greift in den Schlitz im Schieber nur ein Führungsnocken ein, der beim Entrastvorgang als Schwenkachse dient.

Solche Bauarten ermöglichen zum einen keine exakte Geradführung der Schieber, die nach dem Einbau unter Umständen dazu führen kann, dass die gewünschte Einbaulage nicht immer eingehalten ist. Dazu kommt, dass der Entrastvorgang der Schieber nicht immer einfach ist und die Bauweise auch verhältnismäßig viel Platz erfordert, damit bei der Montage die Zugänglichkeit der Lasche zum Zweck der Entrastung gegeben ist.

Der Erfindung liegt die Aufgabe zugrunde, eine verbesserte Unterflurgerätedose dieser Art vorzuschlagen, die einfacher im Aufbau und in der Handhabung ist.

Zur Lösung dieser Aufgabe wird mit der Erfindung bei einer Unterflurgerätedose der eingangs genannten Art vorgeschlagen, dass die Arretierung aus quer zur Bewegungsrichtung der Schieber bewegbaren Anschlagzungen besteht, die an einer in der Ebene des Schiebers liegenden, aber von diesem nach oben abragenden Anschlaglasche anliegen.

Diese Ausgestaltung bringt den Vorteil mit sich, dass die Arretierung nach dem Einsetzen der Unterflurgerätedose sehr einfach von oben her zugängig ist, ohne dass größere Aussparungen für einen Durchgriff zum Entrasten der Schieber notwendig wären.

In Weiterbildung der Erfindung können die Anschlagzungen dabei am Innenrand des Rahmens und vor einem nach oben offenen Schlitz angeordnet sein, in dem die Anschlaglasche beweglich geführt ist. Die Anschlagzungen können in einfacher Weise hakenförmig ausgebildet sein und in den Bereich des Schlitzes mit einem abstehenden Vorsprung hereinragen, so dass zur Entriegelung nur eine verhältnismäßig kleine Auswärtsschwenkbewegung der Anschlagzungen notwendig wird, die beispielsweise mit einem von oben her in den Schlitz für die Führung der Anschlaglasche hereingeführten Werkzeug möglich ist.

Da auch bei der neuen Unterflurgerätedose die Schieber mit Hilfe von Erweiterungen ihres Führungsschlitzes zum Zweck ihrer Montage über die größeren Köpfe der Führungsnocken gesteckt und dann in ihre Einrastposition geschoben werden, oder beim Ausbau einer Unterflurgerätedose aus ihrer Befestigungsstellung nach innen zurück in die eingerastete Stellung geführt werden müssen, ist es in Weiterbildung der Erfindung vorteilhaft, wenn der Vorsprung der für die Arretierung vorgesehenen Anschlagzunge auf der zur Rahmenecke weisenden Seite im Bereich der Anschlagslasche des Schiebers mit einer abgeschrägten Endkante versehen ist. Diese ermöglicht es, dass die Anschlaglasche des Schiebers bei dessen Zurückführung in die Ausgangsstellung die Anschlagzunge selbsttätig zurückschwenkt, so dass der Vorsprung aus der Bewegungsbahn des Schiebers heraus bewegt wird, bis sich dieser in seiner Ausgangsstellung befindet, wo die Anschlagzunge mit ihrem Vorsprung wieder in ihre Arretierstellung zurückschnappt, in der die nicht abgeschrägte Kante des Vorsprunges eine Rückbewegung des Schiebers verhindert.

In Weiterbildung der Erfindung können mindestens zwei Führungsnocken bei dieser Ausgestaltung vorgesehen sein, die mit ihren vergrößerten Köpfen in entsprechende Verbreiterungen des Schlitzes einführbar sind, um eine Montage zu ermöglichen. Diese beiden Führungsnocken garantieren eine gerade Verschiebungsbewegung des Schiebers und sichern dadurch auch einen exakten Halt in der Einbaulage zu. Diese Art der Führung wird nur durch die andere Art der Arretierung ermöglicht, bei der eine Schwenkbewegung um den Führungsnocken - wie bei der bekannten Bauart - zum Zweck des Lösens einer Arretierung nicht notwendig ist. Die beiden Erweiterungen des Schlitzes, die ja nur für die Montage des Schiebers am Rahmen benötigt werden, werden zweckmäßig so angeordnet, dass sie weder in der zurückgezogenen Ausgangsstellung des Schiebers noch in der ausgefahrenen Einbaustellung mit der Lage der Führungsnocken übereinstimmen und so immer eine einwandfreie Führung gewährleisten, ohne die Gefahr mit sich zu bringen, dass der Schieber von seinen Führungsnocken abfällt. Zu diesem Zweck kann eine der Erweiterungen an einem Ende des Schlitzes vorgesehen sein, das von dem mit dem Rand der Öffnung im Fußboden in Eingriff bringbaren Ende abgewandt ist.

Die neue Ausgestaltung ermöglicht in einfacher Weise die Herstellung des Teppichschutzrahmens und der dazugehörigen rahmenförmigen Wand aus Kunststoff und zwar in einfacher Weise als einstückiges Teil.

Die Erfindung ist anhand eines Ausführungsbeispieles in der Zeichnung dargestellt und wird im folgenden erläutert. Es zeigen:
- Fig. 1: eine perspektivische, schematische Darstellung einer neuen Unterflurgerätedose in ihrer Stellung kurz vor dem Einbau in eine Fußbodenöffnung,
- Fig. 2: die vergrößerte Darstellung des Details II nach Fig. 1,
- Fig. 3: die Seitenansicht der Unterflurgerätedose nach Fig. 1 in Richtung des Pfeiles III in der Lage, in der sie vollständig in die Öffnung im Fußboden eingesetzt, aber noch nicht dort befestigt ist, und
- Fig. 4: die Darstellung ähnlich Fig. 3, jedoch in der in der Bodenöffnung befestigten Stellung.

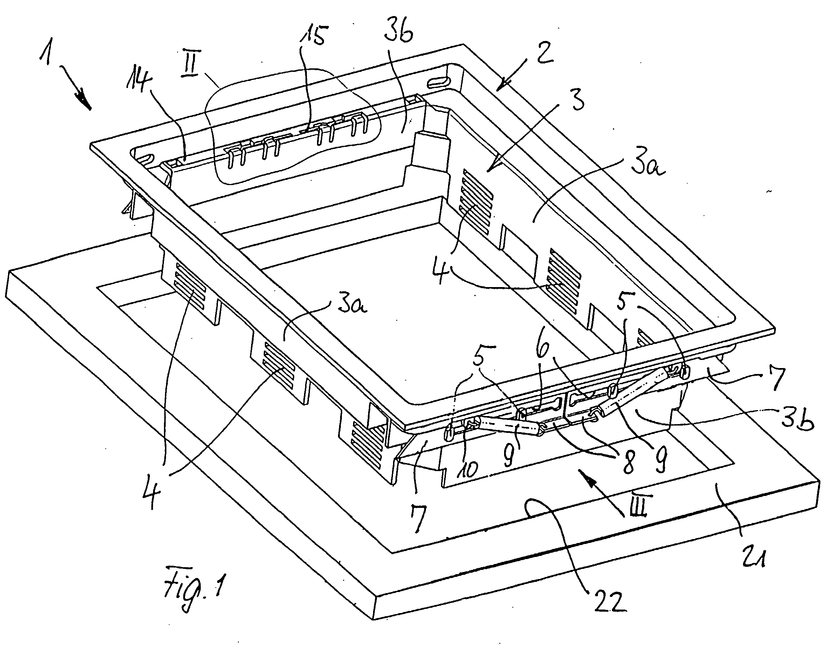

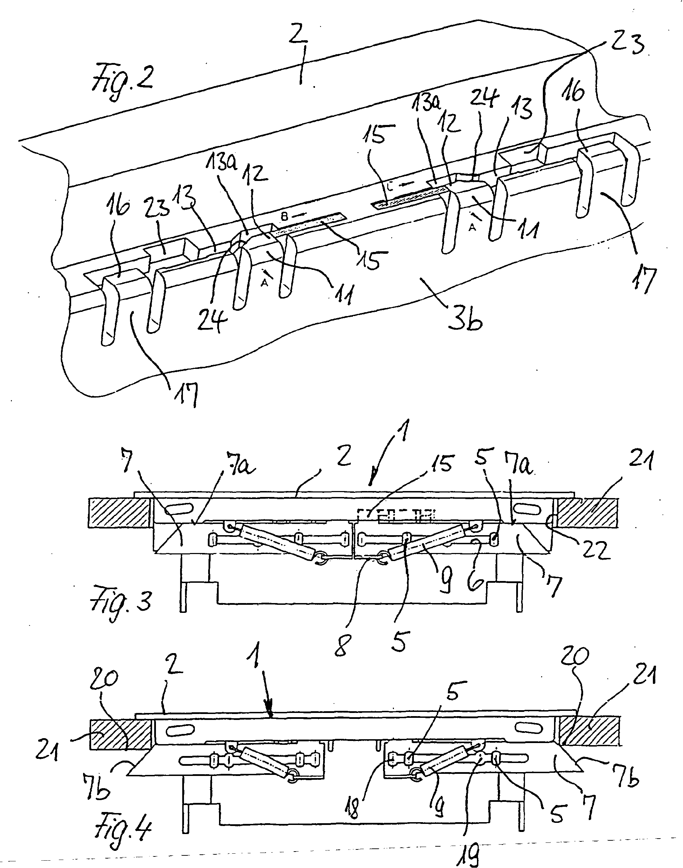

Die Fig. 1 zeigt eine Unterflurgerätedose 1, die einen umlaufenden Teppichschutzrahmen 2 und eine von diesem aus nach innen versetzte, ebenfalls rahmenförmig umlaufende Gehäusewand 3 aufweist, deren gegenüberliegende Wandteile 3a mit treppenförmig ausgebildeten Schlitzreihen 4 versehen sind, in die nach außen abstehende Laschen von nicht gezeigten Gerätebechern einhängbar sind, die in bekannter Weise mit Installationsgeräten bestückt sind. Die beiden anderen, ebenfalls einander gegenüberliegenden Gehäusewände 3b sind mit nach außen abragenden Führungsnocken 5 versehen, die durch Schlitze 6 in Schiebern 7 hindurchgeführt sind und mit ihren erweiterten Köpfen diese Schieber 7 parallel anliegend an den Wänden 3b halten. Jeder der Schieber 7 ist an seinem von der Rahmenecke abgewandten Ende mit einer Lasche 8 versehen, die seitlich abgebogen ist und mit dem Ende einer Zugfeder 9 verbunden ist, deren anderes Ende an einer Lasche 10 befestigt ist, die vom Teppichschutzrahmen 2 aus nach unten absteht. Diese Zugfedern 9 üben in der dargestellten Lage nach Fig. 1 eine Kraft auf die Schieber 7 aus, die diese nach außen zu verschieben versucht. Die Schieber 7 werden in der dargestellten Lage - siehe hierzu auch Fig. 2 - jedoch durch Arretierzungen 11 gehalten, die im oberen Endbereich der Wände 3b angebracht sind und mit Vorsprüngen 12 in einen Schlitz 13 eingreifen, der sich im Absatz 14 zwischen Teppichschutzrahmen 2 und Wandung 3b erstreckt. In diesem Schlitz 13 wird eine Anschlaglasche 15 geführt, die über die Oberkante 7a der Schieber 7 nach oben vorsteht. Der Vorsprung 12 sichert daher in der dargestellten Lage der Anschlagzungen 11 die in Fig. 1, 2 und 3 dargestellte Lage der Schieber 7.

In den Schlitz 13 ragt außerdem noch ein Vorsprung 16 einer zweiten Anschlagzunge 17 herein, die dazu dient, die Schieber 7, die ja von der Kraft der Federn 9 jeweils nach außen gezogen werden, an dem Erreichen der Endstellung zu hindern, in der die am Ende des Schlitzes 6 vorgesehene Erweiterung 18 und eine weitere Erweiterung 19 zur Deckung mit den Köpfen der Führungsnocken 5 kommen. Diese Stellung wird nur für die Montage der Schieber 7 benötigt.

Wie Fig. 1, aber auch den Fig. 3 und 4 zu entnehmen ist, besitzen die Schieber eine abgeschrägte, äußere Endkante 7b, die unter die Unterkante 20 des Fußbodens 21 greift, wenn die Stellung nach Fig. 3 erreicht ist und die Arretierung der Schieber 7 aufgehoben wird. In den Fig. 1, 3 und 4 ist der Fußboden 21 jeweils als ein umlaufender Rahmen mit einer Öffnung 22 dargestellt, in der Praxis ist im Fußboden in der Regel nur die Öffnung 22 vorhanden.

Der Einbau der neuen Unterflurgerätedose 1 geschieht wie folgt: Die Gerätedose 1 wird gemäß Fig. 3 in die Öffnung 22 eingesetzt, bis der Teppichschutzrahmen 1 oben auf dem - nicht dargestellten - Teppichboden aufliegt. Es wird dann von oben her in den Schlitzbereich 13a zum Beispiel mit einem Schraubendreher eingegriffen, um die Arretierzungen 11 im Sinn des Pfeiles A zum Rahmeninneren hin abzuschwenken und so den Vorsprung 12 aus der Bewegungsbahn des Schiebers 7 und seiner Arretierlasche 15 zu bringen. Die Schieber 7 werden dann durch die Wirkung der Feder 9 in ihre Stellung nach Fig. 4 gebracht. Der Vorsprung 16 der Arretierzunge 17 wird dabei nicht von der Arretierlasche 15 erreicht. Die Endstellung wird durch die Anlage der schrägen Kante 7b an der Unterkante 20 des Fußbodens 21 bestimmt.

Die Arretierzungen 17 dienen jedoch dazu zu verhindern, dass die eingebauten Schieber 7 ungewollt so weit durch Federkraft verschoben werden, dass die Erweiterungen 18 und 19 zur Deckung mit den Köpfen der Führungsnocken 5 kommen. Die Schieber 7 könnten dann aus ihrer Führung herausgenommen werden. Die Anschlagzungen 17 sind insofern ein Endanschlag für die montierten Schieber 7.

Für einen Wiederausbau der Unterflurgerätedose 1 aus ihrer Stellung nach Fig. 4 können die Schieber 7 wieder in ihre Stellung nach Fig. 3 zurückgezogen werden, dadurch, dass wiederum an der Arretierlasche 15 von oben her durch den Schlitz 13 - oder eine zu diesem Zweck vorgesehene Erweiterung 23 - angegriffen wird und auf diese Weise die Schieber zurückgeschoben werden. Wie die Fig. 2 dabei deutlich macht, ist die der Rahmenkante zugewandte Endkante 24 der Anschlagzungen 11 abgeschrägt, so dass bei einer Zurückschiebebewegung der Schieber 7 durch das Auflaufen der Arretierlasche 15 auf diese schräge Kante 24 die Arretierzungen 11 selbsttätig in eine Stellung gebracht werden, in der ihr Vorsprung 12 aus der Bewegungsbahn der Lasche 15 innerhalb des Schlitzes 13 entfernt ist. Diese Ausgestaltung sichert daher in einfacher Weise auch eine Demontage zu. Aus der in den Fig. 2 und 3 gezeigten Stellung kann dann jederzeit wieder eine Befestigung der Unterflurgerätedose in der vorher geschilderten Weise erfolgen.

## Patentansprüche

1. Unterflurgerätedose mit einem Teppichschutzrahmen (2) und mit einer mit diesem verbundenen rahmenförmigen Gehäusewand (3), wobei an zwei gegenüberliegenden Seiten (3b) der Gehäusewand flache Schieber (7) geführt sind, die federvorgespannt und nach Lösen einer Arretierung zur Verrastung unterhalb des Fußbodens (21) an der Unterkante (20) des Randes der Öffnung (22) für die Unterflurgerätedose in Eingriff bringbar sind, und wobei die Schieber (7) mit einem in ihrer Längsrichtung verlaufenden Schlitz (6) versehen sind, in den Führungsnocken (5) eingreifen, die von der Wand (3b) nach außen abstehen,
**dadurch gekennzeichnet, daß**
die Arretierung aus quer zur Bewegungsrichtung der Schieber (7) bewegbaren Anschlagzungen (11) besteht, die an einer in der Ebene des Schiebers liegenden, aber von diesem nach oben abragenden Anschlaglasche (15) anliegen.

2. Unterflurgerätedose nach Anspruch 1, **dadurch gekennzeichnet, dass** die Anschlagzungen (11) am Innenrand des Rahmens und vor einem nach oben offenen Schlitz (13) angeordnet sind, in dem die Anschlaglasche (15) beweglich geführt ist.

3. Unterflurgerätedose nach Anspruch 1 oder 2, **dadurch gekennzeichnet, dass** die Anschlagzungen (11) hakenförmig ausgebildet sind und mit einem abstehenden Vorsprung (12) in dem Bereich des Schlitzes hereinragen.

4. Unterflurgerätedose nach Anspruch 3, **dadurch gekennzeichnet, dass** der Vorsprung (12) auf der zur Rahmenecke hin weisenden Außenseite mit einer abgeschrägten Endkante (24) versehen ist.

5. Unterflurgerätedose nach Anspruch 1, **dadurch gekennzeichnet, dass** mindestens zwei Führungsnocken (5) vorgesehen sind, die mit ihren vergrößerten Köpfen in Erweiterungen (18, 19) des Schlitzes (6) eingeführt sind.

6. Unterflurgerätedose nach Anspruch 5, **dadurch gekennzeichnet, dass** die Führungsnocken (5) so angeordnet sind, dass die Erweiterungen (18, 19) des Schlitzes (6) weder in der zurückgezogenen Montagestellung noch in der ausgefahrenen Einbaustellung mit der Lage der Führungsnocken (5) übereinstimmen, wenn eine weitere, als Endanschlag dienende Arretierzunge (17) an der Anschlaglasche (15) anliegt.

7. Unterflurgerätedose nach Anspruch 6, **dadurch gekennzeichnet, dass** eine der Erweiterungen (18) an dem Ende des Schlitzes (6) vorgesehen ist, das von dem mit dem Rand (20) der Öffnung (22) im Fußbodeneingriff stehenden Ende (7b) abgewandt ist.

8. Unterflurgerätedose nach Anspruch 1, **dadurch gekennzeichnet, dass** die rahmenförmige Wand (3) und der Teppichschutzrahmen (2) aus Kunststoff hergestellt sind.

9. Unterflurgerätedose nach Anspruch 8, **dadurch gekennzeichnet, dass** der Teppichschutzrahmen (2) und die rahmenförmige Wand (3) ein einstückiges Teil bilden.

## Claims

1. An underfloor apparatus box having a carpet-protecting frame (2) and a framework housing wall (3) attached thereto, where springloaded, flat slides (7) that may be latched, beneath the floor (21), onto the bottom edge (20) of the border of the aperture (22) for the underfloor apparatus box after a latch has been released are guided on two opposing sides (3b) of the housing wall and the slides (7) have longitudinal slots (6) that are engaged by guide studs (5) that protrude outward from the walls (3b),
**characterized in that**
the latch consists of a pair of stop tabs (11) that may be translated transverse to the directions of motion of the slides (7) and abut against stop tabs (15) that lie in the planes of the slides, but protrude upward therefrom.

2. An underfloor apparatus box according to claim 1, **characterized in that** the stop tabs (11) are arranged on the inner edge of the frame and inward of a slot (13) that is open at the top, in which the stop tabs (15) are guided.

3. An underfloor apparatus box according to claim 1 or claim 2, **characterized in that** the stop tabs (11) are hook-shaped and have a protrusion (12) extending into the vicinity of the slot.

4. An underfloor apparatus box according to claim 3, **characterized in that** the side of the protrusions (12) that faces the corners of the frame has a beveled edge (24).

5. An underfloor apparatus box according to claim 1, **characterized in that** at least two guide studs (5) whose enlarged head is inserted into extensions (18, 19) of the slots (6) are provided.

6. An underfloor apparatus box according to claim 5, **characterized in that** the guide studs (5) are arranged such that the extensions (18, 19) of the slots (6) will not coincide with the locations of the guide studs (5) while the slides are in either their retracted position that is used for installation or their extended, installed, position, whenever another stop tab (17) serving as an end stop abuts against the stop tab (15).

7. An underfloor apparatus box according to claim 6, **characterized in that** one of the extensions (18) is provided on that end of the slot (6) that faces away from that end (7b) of the slide that engages the edge (20) of the aperture (22) in the floor.

8. An underfloor apparatus box according to claim 1, **characterized in that** the framework wall (3) and carpet-protecting frame (2) are fabricated from plastic.

9. An underfloor apparatus box according to claim 8, **characterized in that** the carpet-protecting frame (2) and framework wall (3) form a monolithic structure.

## Revendications

1. Boîtier pour appareillage installé sous plancher, comprenant un cadre de protection de moquette (2) et comprenant une paroi de boîtier (3) en forme de cadre, raccordée au cadre de protection de moquette, des targettes plates (7) étant guidées sur deux côtés opposés (3b) de la paroi de boîtier, qui sont précontraintes de manière élastique et qui, après le déblocage d'un dispositif de blocage destiné à l'encliquetage en dessous du plancher (21), peuvent avoir prise sur l'arête inférieure (20) du bord de l'ouverture (22) pour le boîtier pour appareillage installé sous plancher, et les targettes (7) étant munies d'une fente (6) s'étendant dans leur direction longitudinale, dans laquelle fente ont prise des cames de guidage (5) dépassant de la paroi (3b) vers l'extérieur,
**caractérisé en ce que**
le dispositif de blocage est constitué de languettes de butée (11) déplaçables transversalement par rapport aux targettes (7), ces languettes de butée étant adjacentes à une languette de butée (15) située dans le plan de la targette mais dépassant de celle-ci vers le haut.

2. Boîtier pour appareillage installé sous plancher selon la revendication 1, **caractérisé en ce que** les languettes de butée (11) sont disposées sur le bord intérieur du cadre et devant une fente (13) ouverte vers le haut, dans laquelle la languette de butée (15) est guidée de manière déplaçable.

3. Boîtier pour appareillage installé sous plancher selon la revendication 1 ou 2, **caractérisé en ce que** les languettes de butée (11) sont exécutées en forme de crochet et **en ce qu'**elles rentrent dans la zone de la fente par une saillie (12) dépassant.

4. Boîtier pour appareillage installé sous plancher selon la revendication 3, **caractérisé en ce que** la saillie (12), sur le côté extérieur tourné vers le coin du cadre, est munie d'une arête terminale biseautée (24).

5. Boîtier pour appareillage installé sous plancher selon la revendication 1, **caractérisé en ce qu'**au moins deux cames de guidage (5) sont prévues, qui, avec leurs têtes agrandies, sont introduites dans des élargissements (18, 19) de la fente (6).

6. Boîtier pour appareillage installé sous plancher selon la revendication 5, **caractérisé en ce que** les cames de guidage (5) sont disposées de telle manière que les élargissements (18, 19) de la fente (6), ni dans la position d'installation rétractée ni dans la position d'installation sortie, ne coïncident avec la position des cames de guidage (5) lorsqu'une languette de blocage supplémentaire (17) servant de butée terminale est adjacente à la languette de butée (15).

7. Boîtier pour appareillage installé sous plancher selon la revendication 6, **caractérisé en ce que** l'un des élargissements (18) est prévu sur l'extrémité de la fente (6) qui est détournée de l'extrémité (7b) en prise dans le plancher avec le bord (20) de l'ouverture (22).

8. Boîtier pour appareillage installé sous plancher selon la revendication 1, **caractérisé en ce que** la paroi (3) en forme de cadre et le cadre de protection de moquette (2) sont fabriqués en matière plastique.

9. Boîtier pour appareillage installé sous plancher selon la revendication 8, **caractérisé en ce que** le cadre de protection de moquette (2) et la paroi (3) en forme de cadre forment une pièce d'un seul morceau.
